# FASCICULE DE BREVET EUROPEEN

(11) **EP 3 060 717 B1**
(45) Date de publication et mention de la délivrance du brevet: **12.07.2023**
(21) Numéro de dépôt: 14805981.9
(22) Date de dépôt: 24.10.2014
(51) Int. Cl.: B03D 1/14, B03D 1/24, D21B 1/32

(54) **PROCÉDÉ DE FLOTTATION, ET INSTALLATION POUR SA MISE EN OEUVRE**
FLOTATIONSVERFAHREN UND ANLAGE ZUR UMSETZUNG DAVON
FLOTATION PROCESS AND FACILITY FOR THE IMPLEMENTATION THEREOF

(30) Priorité: 25.10.2013 FR 1360439
(43) Date de publication de la demande: 31.08.2016
(73) Titulaire: KADANT LAMORT, 51300 Vitry-le-François (FR)
(72) Inventeur: POTTIER, Stéphan, F-51300 Frignicourt (FR)
(74) Mandataire: Littolff, Denis
(86) Numéro de dépôt international: PCT/FR2014/052718
(87) Numéro de publication internationale: WO 2015/059429

(56) Documents cités:
- EP-A1- 0 674 040
- FR-A1- 2 963 627

## Description

L'invention concerne un procédé de flottation multi étages en série pour l'élimination de particules hydrophobes d'un flux de matières à traiter et une installation de mise en oeuvre de ce procédé.

Une telle invention pourra notamment être appliquée au désencrage en vue du recyclage de vieux papiers ou également à l'élimination de substances hydrophobes présentes dans certains flux provenant de pâtes vierges ou autres (cotons, etc.) ou dans les eaux issues de la mise en oeuvre de procédés industriels.

Tout particulièrement, les vieux papiers ou papiers récupérés peuvent être recyclés en nouveaux papiers grâce à des installations permettant d'épurer ces vieux papiers.

D'une manière usuelle, le procédé mis en oeuvre par ces installations consiste, tout d'abord, à mélanger ces vieux papiers avec de l'eau dans un pulpeur, tout en y ajoutant des agents chimiques adaptés. Le papier est alors désagrégé par effet mécanique et les fibres de cellulose sont remises en suspension aqueuse avant qu'interviennent les différentes opérations ayant pour but de le libérer de ses différents contaminants. Ainsi, des principes de séparation par écart de densité sont appliqués pour séparer les composants lourds des composants légers. De même, des moyens de filtration sont fréquemment utilisés pour séparer les particules en fonction de leurs tailles. Ainsi, par exemple, il peut être utilisé des épurateurs sous pression avec tamis à ouvertures ou à trous, voire des laveurs à toile, pour assurer cette fonction. Enfin, des cellules de flottation à air dispersé mettent à profit les propriétés hydrophobes distinctes des composants en présence pour assurer leur séparation.

Les différentes opérations précitées sont habituellement effectuées les unes derrière les autres sur une ligne de traitement dimensionnée pour traiter le débit global de pâte à papier.

Dans le cas plus spécifique du recyclage de papier encré (journal, magazine, papier de bureau, ...), l'enlèvement de l'encre en tant que contaminant est prioritaire : c'est le procédé de « désencrage ». Cette encre se trouve déposée à la surface du papier lors de son impression. Si cette surface du papier n'est composée que de fibres, l'encre va se déposer sur celles-ci. Par contre si cette surface du papier comporte une couche de charges (carbonate de calcium, kaolin,...) , l'encre va se déposer sur cette dernière et non directement sur les fibres.

S'il existe de multiples procédés d'impression (offset, helio, flexo, ...) sur divers supports papier, les uns et les autres ont des conséquences sur les opérations de désencrage lors du recyclage du papier.

Quoiqu'il en soit, lors du pulpage du papier recyclé, les composants du papier se séparent par l'hydratation et les chocs mécaniques. Parmi ces composants on distingue: les fibres de cellulose, qu'elles soient longues, moyennes ou courtes, les fines, essentiellement composées de fragments de cellulose trop petits pour être qualifiés de fibre, les charges minérales et les contaminants que sont, par exemple, les particules de plastiques, bûchettes de bois, les encres et les stickies qui sont des résidus divers fractionnés ou ré-agglomérés mais aussi de composants chimiques présents dans la matière première et/ou rajoutés dans le processus de fabrication de la matière traitée.

En ce qui concerne les encres, elles ne se fragmentent pas totalement et, selon le cas, le mode opératoire change.

L'encre désagrégée en petites particules peut être facilement éliminée par flottation ou lavage. A l'inverse, la flottation est moins efficace sur l'encre restée sous forme de grosses particules, appelées points noirs ou sous forme micronisée voire dissoute. Le document FR2 963 627 divulgue une solution de prétraitement, permettant d'opérer une telle réduction dans un procédé parallèle, puis de réunir l'ensemble dans un même procédé de flottation.

Différentes techniques sont actuellement mises en oeuvre pour éliminer les particules d'encre par flottation. A ce propos, on connaît par le document EP-0 674 040 un procédé de désencrage de pâte à papier dans lequel on fait circuler de haut en bas un flux de pâte à papier et, en sens inverse, de bas en haut, un flux de bulles d'air, sachant que la masse de pâte à papier subit des étapes de recyclage successives dans des étages situés les uns au-dessus des autres dans une même cellule.

En somme, le flux de bulles d'air, injecté en bas de cellule, vient traverser successivement, dans chaque étage, la masse de pâte à papier, laquelle entre, au niveau d'un étage, par une entrée pour en être prélevée en contrebas au niveau d'une sortie, afin d'être réinjectée à hauteur de l'entrée de l'étage suivant placé immédiatement en-dessous.

Des pompes assurent cette reprise de la pâte à papier à chaque étage, sachant qu'à ce niveau peut également intervenir une nouvelle injection d'air, si nécessaire.

En partie supérieure de la cellule, on récupère la mousse qui s'y est formée et qui a entraîné les particules hydrophobes dont l'encre.

De telles cellules de flottation se sont avérées particulièrement efficaces et d'un rendement élevé en comparaison à des installations comportant, pour chaque étage de flottation, des unités de traitement distinctes installées côte à côte.

Le document FR2 963 627 divulgue par ailleurs un procédé similaire de flottation dans un dispositif non plus circulaire mais rectangulaire allongé, que nous appellerons procédé linéaire par opposition au procédé circulaire, comportant une enceinte de forme parallélépipédique subdivisée, en étages horizontaux par l'intermédiaire de séparateurs à ouvertures au travers desquelles les bulles d'air d'un étage inférieur, peuvent pénétrer dans l'étage supérieur afin de traverser le flux de matières circulant dans ce dernier.

Précisément, au niveau de chaque étage, le flux de matières pénètre au niveau d'un orifice d'entrée à une extrémité latérale de l'unité de flottation pour en sortir au niveau d'un orifice de sortie à l'extrémité latérale opposée et regagner, au niveau de cette même extrémité latérale et par l'intermédiaire d'un orifice d'entrée, l'étage suivant et ainsi de suite.

Dans le but d'optimiser la capacité d'élimination des particules hydrophobes, il est nécessaire de procéder à des aérations successives de la matière en utilisant par exemple des injecteurs à effet Venturi sachant que la capacité d'ajout d'air de l'injecteur est fortement réduite en cas de présence d'air résiduel dans la matière avant injection.

La présente invention a pour but l'amélioration des installations pour l'élimination de substances hydrophobes présentes dans un flux de matières à traiter, tel que notamment un flux de vieux papiers, grâce à la mise en oeuvre d'un procédé de traitement optimisé.

Ainsi, c'est dans le cadre d'une démarche inventive qu'on a imaginé un procédé de traitement prévoyant, à la fin de chaque étape de traitement sur un étage, une étape de désaération sans aération complémentaire provenant de ou des étages suivants de la matière à traiter.

L'objectif de cette étape complémentaire est d'éviter au mieux que certaines bulles d'air pénètrent dans la couche de matières à traiter au niveau d'un étage, et restent piégées dans la matière à traiter pour revenir à l'étage inférieur en traversant l'injecteur. En effet, au fur et à mesure qu'elles montent dans les étages, les bulles d'air sont de plus en plus chargées en encre, ce qui fait que leur efficacité à capter de l'encre supplémentaire baisse. Au contraire, la matière à traiter devient de plus en plus propre au fur et à mesure qu'elle descend dans les étages. Ainsi une bulle d'air entraînée vers le bas avec la matière à traiter viendrait polluer l'étage inférieur, et réduirait ainsi la performance globale.

Dans une seconde démarche inventive, il a été imaginé de mettre à profit une installation de flottation étagée linéaire, pour mettre en oeuvre le procédé selon l'invention.

C'est en effet en allant à l'encontre des usages de l'homme du métier préférant impulser de l'air par des ouvertures réparties sur l'ensemble de l'étage, pour optimiser la pénétration de l'air dans la matière à traiter, qu'on a imaginé préserver une zone précédent la sortie de la matière à traiter, de chaque étage avec un plancher étanche. La longueur de ce plancher étanche est définie avec pour objectif de permettre que les bulles d'air ayant pénétré par les ouvertures du séparateur dans la matière à traiter aient dans leur très grande majorité le temps de traverser la couche de matière avant que celle-ci ne soit envoyée dans l'étage en dessous à travers un nouvel injecteur. Un séparateur selon l'état de la technique est muni d'ouvertures plus rapprochées aux étages supérieurs pour permettre le passage d'une plus grande quantité d'air. Il est clair qu'entre deux ouvertures, le séparateur est étanche. La notion d'un plancher étanche en sortie d'étage doit donc être comprise comme une configuration permettant un temps de parcours sans introduction de bulles d'air dans la matière avant sa sortie d'un étage lui permettant d'être très majoritairement désaérée. Par exemple la longueur du plancher étanche sera nettement supérieure à la distance entre deux ouvertures consécutives, en particulier au moins deux fois supérieure, par exemple six fois supérieure.

A cet effet, l'invention concerne un procédé de flottation multi étages, de préférence linéaire, en série pour l'élimination de particules hydrophobes, comportant une étape d'introduction, dans un étage, d'une couche de matière à traiter, provenant soit d'un étage supérieur soit directement de l'entrée du système, le procédé comportant une étape d'aération dans laquelle l'air extrait des étages inférieurs est mélangé, diffusé et dispersé dans la couche de matières à traiter puis s'échappe vers l'étage supérieur ou vers une zone d'évacuation des mousses, caractérisé en ce qu'il comporte, après l'étape d'aération, une étape de désaération dans laquelle il n'y a plus d'introduction d'air dans la couche de matières à traiter avant sa sortie d'un étage et permettant l'évacuation de l'air dispersé vers les étages supérieurs ou dans le cas de l'étage situé le plus haut, vers une zone d'évacuation des mousses, et une étape de récupération de la matière désaérée.

Grâce à ces dispositions on obtient une désaération améliorée audit étage, ce qui réduit la quantité des encres et adhésifs libres recyclés vers l'étage inférieur, et permet in fine une meilleure élimination des particules indésirables.

L'invention s'applique particulièrement bien à un procédé linéaire, mais pourrait être mis en oeuvre également sur un procédé circulaire.

Selon un mode préféré de réalisation de l'invention, à chaque étage supérieur, la durée de l'étape de désaération peut être d'au moins 20% de la durée de l'étape d'aération, conférant une désaération optimisée au procédé.

L'invention concerne encore une installation de flottation multi étagée pour la mise en oeuvre du procédé tel que précédemment décrit, comportant une enceinte subdivisée verticalement en étages au niveau de chacun desquels un flux de matières à traiter pénètre au niveau d'un orifice d'entrée situé à une extrémité latérale de l'enceinte pour en sortir au niveau d'un orifice de sortie, chaque étage supérieur comportant un séparateur à ouvertures agencées pour laisser passer des bulles d'air provenant de l'étage immédiatement inférieur, ladite installation comportant en outre une zone d'évacuation des mousses surmontant les différentes étages et communiquant avec ces derniers et avec une ouverture d'évacuation, caractérisée par le fait qu'au moins un étage supérieur comporte un plancher étanche adjacent à sa sortie, ledit plancher étanche étant configuré pour permettre un temps de parcours sans introduction d'air dans la couche de vieux papiers à traiter avant sa sortie d'un étage.

Grâce à ces dispositions, on obtient une désaération améliorée audit étage, ce qui réduit la quantité des substances hydrophobes recyclées vers l'étage inférieur, telles que notamment des encres et des adhésifs libres.

Conformément à d'autres caractéristiques de l'installation selon l'invention:
- la longueur dudit plancher étanche peut correspondre à au moins 20% de la longueur dudit séparateur à ouvertures, permettant une désaération optimisée,
- la longueur du plancher étanche est supérieure à la longueur comprise entre deux ouvertures consécutives du séparateur à ouvertures.
- la longueur du plancher étanche est au moins deux fois supérieure à la longueur comprise entre deux ouvertures consécutives du séparateur à ouvertures.

Par ailleurs, conformément à une variante de réalisation préférentielle, le nombre d'ouvertures que comporte un séparateur à ouvertures est croissant en montant les étages, de sorte à permettre une évacuation optimale de l'air dont la proportion augmente en montant les étages. De plus, le fait que le nombre d'ouvertures soit maximal au niveau du séparateur à ouvertures de l'étage supérieur permet de répartir et diffuser l'air de manière homogène sur toute la surface de l'enceinte, assurant ainsi une formation homogène des mousses, et par conséquent un fonctionnement optimisé de la zone d'évacuation des mousses.

De plus, les ouvertures d'un séparateur à ouvertures peuvent présenter une dimension et une géométrie telles qu'elles permettent une aspiration optimale de l'air en provenance d'un étage inférieur.

A cet effet, les séparateurs à ouvertures des étages supérieurs peuvent être décalés les uns par rapport aux autres de manière telle à obtenir ladite géométrie desdites ouvertures.

Une telle structure permet avantageusement de créer un différentiel de vitesse de matières à traiter entre deux étages consécutifs, et par conséquent de créer, par effet « Venturi », une aspiration homogène de l'air provenant des étages inférieurs.

Conformément à une caractéristique additionnelle de l'invention, la zone d'évacuation des mousses comporte un collecteur des mousses apte à assurer une collecte et une évacuation d'uniquement la partie supérieure des mousses.

De plus, le collecteur peut préférentiellement présenter une inclinaison. Ceci permet d'assurer une évacuation homogène et non préférentielle des mousses sur toute la surface de l'enceinte et d'éviter la présence de zones mortes, du fait de l'augmentation du débit des mousses dans le collecteur à mesure que l'on s'approche de l'ouverture d'évacuation des mousses de l'enceinte.

Une caractéristique additionnelle de l'installation selon l'invention est encore définie par le fait que chaque étage supérieur peut comporter un plancher étanche adjacent à sa sortie, optimisant ainsi la désaération à chaque étage supérieur.

Avantageusement, la longueur des planchers étanches peut être croissante en descendant les étages, permettant ainsi une désaération de qualité croissante au fur et à mesure du traitement.

D'autres buts et avantages de la présente invention apparaîtront au cours de la description qui va suivre, se rapportant à un exemple de réalisation donné à titre indicatif et non limitatif.

La compréhension de cette description sera facilitée en se référant au dessin ci-joint :

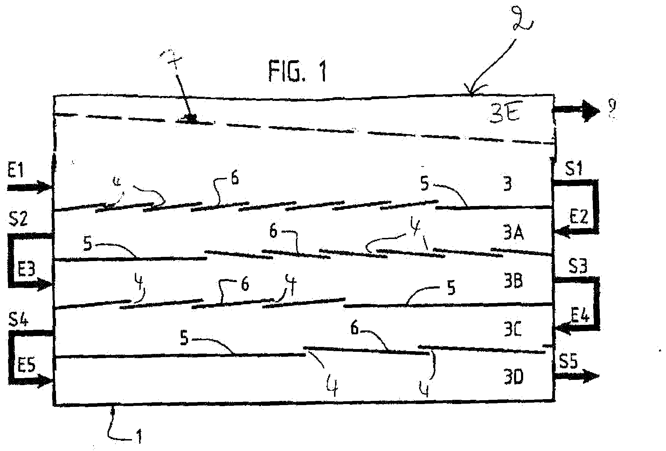

- la figure 1 est une représentation schématisée d'une installation mettant en oeuvre ce procédé.

Telle que représentée dans le schéma de la figure ci-jointe, la présente invention trouve par exemple une application dans le domaine du traitement de vieux papiers en vue de leur recyclage.

Ainsi, l'invention concerne plus particulièrement une partie d'un procédé de séparation de particules hydrophobes.

A ce propos, l'installation consiste en une unité de flottation 1, mettant à profit le caractère plus ou moins hydrophobe des particules en présence pour en retirer certaines d'entre elles, par exemple les particules d'encre et d'adhésifs.

Le principe même mis en application dans une telle unité de flottation 1, consiste, préférentiellement, à faire traverser le flux de matière à traiter entrant dans cette unité de flottation 1 par un flux de bulles d'air qui, au contact des particules hydrophobes, entraîne ces dernières. La matière à traiter peut par exemple consister en des vieux papiers, en vue de leur recyclage. La matière à traiter peut également consister en un flux d'eaux issues de la mise en oeuvre de procédés industriels telles que par exemple les eaux issues de procédés de recyclage de papier ou de tout autre type de procédé et contenant des particules hydrophobes à éliminer.

Cette unité de flottation 1 consiste en une cellule disposée en long comportant une enceinte 2 de forme parallélépipédique subdivisée, verticalement, en étages 3, 3A, 3B, 3C, 3D par l'intermédiaire de séparateurs 6 à ouvertures 4 au travers desquelles les bulles d'air d'un étage inférieur 3A, 3B, 3C, 3D peuvent pénétrer dans l'étage supérieur 3, 3A, 3B, 3C et traverser le flux de matières à traiter circulant dans ce dernier.

Précisément, au niveau de chaque étage 3, 3A, 3B, 3C le flux de matières à traiter pénètre au niveau d'un orifice d'entrée E1, à une extrémité latérale de l'unité de flottation 1 pour en sortir au niveau d'un orifice de sortie S1, à l'extrémité latérale opposée et regagner, au niveau de cette même extrémité latérale et par l'intermédiaire d'un orifice d'entrée E2, l'étage 3A suivant et ainsi de suite, jusqu'à être évacué par l'orifice de sortie S5 de l'étage le plus bas 3D.

Chaque étage comprend quatre zones distinctes :
- Zone d'aération : Mélange, diffusion et dispersion de l'air dans la matière à traiter.
- Zone de mélange : Entrainement et mélange de bulles provenant de l'étage inférieur et accumulation de bulles en partie haute.
- Zone d'évacuation des bulles : Entrainement et mélange de bulles provenant de l'étage inférieur et évacuation des bulles vers l'étage supérieur ou vers une zone d'accumulation des mousses.
- Zone de désaération : Evacuation des bulles résiduelles vers l'étage supérieur.

La zone de mélange de chaque étage est située au-dessus de la zone de désaération de l'étage inférieur et les zones d'évacuation des bulles sont situées les unes au-dessus des autres.

Selon l'invention, au moins un, et de préférence chaque étage supérieur 3, 3A, 3B, 3C comporte également un plancher étanche 5 correspondant à la zone de désaération disposée adjacente à sa sortie S1, S2, S3, S4. Ainsi au cours du transit de la matière à traiter dans un étage supérieur 3, 3A, 3B, 3C, elle reçoit des bulles d'air provenant de l'étage immédiatement inférieur 3A, 3B, 3C, 3D dans les zones de mélange et d'évacuation des bulles tant qu'elle se trouve sur le séparateur 6 à ouvertures 4; ces bulles d'air, après un temps de séjour dans la matière à traiter, s'échappent vers le haut. Ensuite, sur le plancher étanche 5, elle ne reçoit plus de bulles d'air, les bulles d'air toujours contenues dans la matière à traiter continuant à s'échapper vers le haut. On obtient ainsi une zone finale (zone de désaération) de désaération sans ré-aération à chaque étage supérieur. Un étage supérieur 3, 3A, 3B, 3C peut être qualifié de supérieur s'il est disposé au-dessus d'un autre étage, et d'inférieur 3A, 3B, 3C, 3D s'il est disposé en dessous d'un autre étage. Pour l'exemple représenté à cinq étages, l'étage du bas 3D est un étage inférieur, les étages intermédiaires 3A, 3B, 3C sont à la fois des étages inférieurs et supérieurs, et l'étage du haut 3 est un étage supérieur.

On peut dimensionner le plancher étanche 5 en tenant compte du temps de séjour des bulles d'air dans l'épaisseur de matière à traiter, en recherchant une désaération la plus complète possible. Néanmoins toutes les bulles d'air ne traversent pas une couche de matière à traiter à la même vitesse, et si on voulait garantir une désaération totale, la longueur du plancher étanche 5 serait excessive, et coûterait excessivement cher. On cherche donc un compromis entre la qualité de désaération et le coût de l'installation et le temps global de séjour de la matière à traiter. L'avantage apporté par la présente invention devient sensible dès qu'une seconde étape de désaération est effectivement présente.

Au niveau de l'installation, la longueur du plancher étanche 5 doit être significativement plus grande que la distance comprise entre deux ouvertures 4 successives sur le séparateur 6 à ouvertures 4, de préférence au moins deux fois plus grande que cette distance, par exemple six fois cette distance.

Habituellement la distance comprise entre deux ouvertures 4 adjacentes est plus grande dans les étages du bas, et plus petite dans les étages du haut. Cela permet d'ajouter des bulles d'air à chaque étage, les ouvertures 4 plus rapprochées permettant alors de faire passer un plus grand débit d'air. On peut, selon un mode préféré de réalisation de la présente invention disposer également un plancher étanche 5 de plus en plus long au fur et à mesure qu'on descend dans les étages 3, 3A, 3B, 3C et donc avoir un plancher étanche 5 plus court aux étages plus hauts, et un plancher étanche 5 plus long aux étages plus bas. On obtient ainsi une désaération de plus en plus complète au fur et à mesure du traitement de la matière à traiter.

Par exemple à l'étage 3, la longueur du plancher étanche 5 peut être de l'ordre de 30% de la longueur du séparateur 6 à ouvertures 4, alors qu'à l'étage 3C de la fig. 1, la longueur du plancher étanche 5 peut atteindre une valeur identique à la longueur du plateau 6 à ouvertures 4, pour s'assurer qu'un maximum de bulles d'air chargées d'encre ait bien eu le temps d'évacuer matière à traiter, avant de diriger la matière à traiter vers l'étage 3D qui est l'étage le plus bas, et le dernier pour le traitement. A l'étage 3D est alors introduit de l'air propre, ce qui assure une propreté optimale pour la matière sortant de l'installation 1.

D'autre part, tel que déjà décrit précédemment, les différentes fonctions du séparateur 6 à ouvertures 4, consistant à capter, canaliser, diffuser et répartir l'air en provenance d'un étage inférieur 3A, 3B, 3C, 3D dans un étage supérieur 3, 3A, 3B, 3C, de façon à optimiser un mélange homogène de l'air dans la matière à traiter, peuvent encore être améliorées par le choix d'une géométrie et d'une dimension spécifiques de ses ouvertures 4. De même, un tel but est atteint en prévoyant un nombre croissant d'ouvertures 4 d'un séparateur 6 en montant les étages 3, 3A, 3B, 3C. Une évacuation homogène des mousses et par conséquent un fonctionnement amélioré de la zone 3E d'évacuation des mousses est par ailleurs obtenu grâce à la présence dans ladite zone 3E d'évacuation des mousses, d'un collecteur 7 apte à assurer une collecte et une évacuation d'uniquement la partie supérieure des mousses et présentant une inclinaison permettant de prendre en considération l'augmentation du débit des mousses dans le collecteur à mesure que l'on s'approche de l'ouverture d'évacuation 8 de l'enceinte 2. Grâce à une telle configuration, les mousses produites lors du procédé ne peuvent plus revenir dans le flux de matière à traiter, et sont canalisées dans le collecteur 7 avant d'être évacuées par l'ouverture d'évacuation 8.

Tel qu'il ressort de la description qui précède, la présente invention apporte un net progrès technique dans le domaine du traitement de vieux papiers et autres matières.

Bien que l'invention ait été décrite à propos d'une forme de réalisation particulière, il est bien entendu qu'elle n'y est nullement limitée et qu'on peut y apporter diverses modifications de formes, de matériaux et de combinaisons de ces divers éléments sans pour cela s'éloigner du cadre et de l' esprit de l'invention. L'invention est définie exclusivement par les revendications suivantes.

## Revendications

1. Procédé de flottation multi étages en série pour l'élimination de particules hydrophobes d'un flux de matières à traiter, comportant une étape d'introduction, dans un étage d'une enceinte (2) de forme parallélépipédique, d'une couche de matières à traiter provenant soit d'un étage supérieur (3, 3A, 3B, 3C) soit directement d'une entrée (E1) de l'enceinte (2), le procédé comportant une étape d'aération effectuée dans une zone de mélange dudit étage dans laquelle l'air extrait des étages inférieurs est mélangé, diffusé et dispersé dans la couche de matières à traiter puis s'échappe vers l'étage supérieur ou vers une zone (3E) d'évacuation des mousses, et, après l'étape d'aération :
- une étape de désaération dans laquelle il n'y a plus d'introduction d'air dans la couche de matières à traiter avant sa sortie de l'étage et permettant l'évacuation de l'air dispersé vers les étages supérieurs (3, 3A, 3B, 3C) ou dans le cas de l'étage (3) situé le plus haut, vers une zone (3E) d'évacuation des mousses, ainsi qu'
- une étape de récupération de la matière désaérée à travers un orifice d'entrée d'un étage immédiatement inférieur vers une zone de mélange de l'étage immédiatement inférieur ou à travers un orifice de sortie (S5) de l'enceinte,
**caractérisé en ce que** l'étape de désaération est mise en oeuvre dans une zone de désaération de l'étage, ladite zone de désaération étant située au-dessus et dans l'axe de la zone de mélange de l'étage immédiatement inférieur.

2. Procédé de flottation selon la revendication précédente, dans lequel à chaque étage supérieur, la durée de l'étape de désaération est d'au moins 20% de la durée de l'étape d'aération.

3. Installation de flottation (1) multi étagée pour la mise en oeuvre du procédé selon l'une quelconque des revendications précédentes, comportant une enceinte (2) de forme parallélépipédique, subdivisée verticalement en étages (3, 3A, 3B, 3C, 3D) au niveau de chacun desquels un flux de matières à traiter pénètre au niveau d'un orifice d'entrée (E1, E2, E3, E4, E5) situé à une extrémité latérale de l'enceinte (2) pour en sortir au niveau d'un orifice de sortie (S1, S2, S3, S4, S5) situé à l'extrémité latérale opposée, chaque étage supérieur (3, 3A, 3B, 3C) comportant un séparateur (6) à ouvertures (4) agencées pour laisser passer des bulles d'air provenant de l'étage immédiatement inférieur (3A, 3B, 3C, 3D), ledit séparateur (6 ) à ouvertures (4) étant disposé immédiatement en aval de l'orifice d'entrée (E1, E2, E3, E4) de l'étage considéré 3, 3A, 3B, 3C), ladite installation comportant en outre une zone (3E) d'évacuation des mousses surmontant les différentes étages (3, 3A, 3B, 3C) communiquant avec ces derniers et avec une ouverture d'évacuation (8), tandis qu'au moins un étage supérieur (3, 3A, 3B, 3C) comporte un plancher étanche (5) s'étendant entre son séparateur (6) à ouvertures (4) et sa sortie (S1, S2, S3, S4), ledit plancher étanche (5) étant configuré pour permettre un temps de parcours sans introduction d'air dans la couche de matières à traiter avant sa sortie d'un étage (3, 3A, 3B, 3C, 3D), **caractérisée par le fait que** l'orifice d'entrée (E2, E3, E4, E5) d'un étage (3A, 3B, 3C, 3D) est disposé sur la même extrémité latérale de l'enceinte (2) que l'orifice de sortie (S1, S2, S3, S4) de l'étage immédiatement supérieur 3, 3A, 3B, 3C).

4. Installation (1) selon la revendication précédente, **caractérisée en ce que** la longueur dudit plancher étanche (5) correspond à au moins 20% de la longueur dudit séparateur (6) à ouvertures (4).

5. Installation (1) selon la revendication 3, **caractérisée en ce que** la longueur du plancher étanche (5) est supérieure à la longueur comprise entre deux ouvertures (4) consécutives du séparateur (6) à ouvertures (4).

6. Installation (1) selon la revendication 5, **caractérisée en ce que** la longueur du plancher étanche (5) est au moins deux fois supérieure à la longueur comprise entre deux ouvertures (4) consécutives du séparateur (6) à ouvertures (4).

7. Installation (1) selon l'une des revendications 3 à 6, **caractérisée en ce que** le nombre d'ouvertures (4) que comporte un séparateur (6) à ouvertures (4) est croissant en montant les étages (3, 3A, 3B, 3C).

8. Installation (1) selon l'une des revendications 3 à 7, **caractérisée en ce que** les ouvertures (4) d'un séparateur (6) à ouvertures (4) présentent une dimension et une géométrie telles qu'elles permettent une aspiration optimale de l'air en provenance d'un étage inférieur (3A, 3B, 3C, 3D).

9. Installation (1) selon la revendication 8, **caractérisée en ce que** les séparateurs (6) à ouvertures (4) des étages supérieurs (3, 3A, 3B, 3C) sont décalés les uns par rapport aux autres de manière à créer, par effet « Venturi », une aspiration homogène de l'air provenant des étages inférieurs.

10. Installation (1) selon l'une des revendications 3 à 9, **caractérisée en ce que** la zone d'évacuation des mousses comporte un collecteur (7) des mousses apte à assurer une collecte et une évacuation d'uniquement la partie supérieure des mousses.

11. Installation selon la revendication 10, **caractérisée en ce que** le collecteur (7) des mousses présente une inclinaison.

12. Installation (1) selon l'une des revendications 3 à 11, **caractérisée en ce que** chaque étage supérieur (3, 3A, 3B, 3C) comporte un plancher étanche (5) adjacent à sa sortie (S1, S2, S3, S4).

13. Installation (1) selon la revendication précédente, **caractérisée en ce que** la longueur des planchers étanches (5) est croissante en descendant les étages (3, 3A, 3B, 3C).

## Patentansprüche

1. Flotationsverfahren auf mehreren Ebenen in Serie zur Entfernung hydrophober Partikel aus einem Fluss von zu behandelnden Materialien, umfassend einen Schritt des Einführens, in eine Ebene eines quaderförmigen Gehäuses (2), einer Schicht von zu behandelnden Materialien, die entweder von einer oberen Ebene (3, 3A, 3B, 3C) oder direkt von einem Einlass (E1) des Gehäuses (2) stammen, wobei das Verfahren einen Belüftungsschritt umfasst, der in einer Mischzone der Ebene durchgeführt wird, in der die aus den unteren Ebenen abgesaugte Luft gemischt, diffundiert und in der Schicht der zu behandelnden Materialien dispergiert wird, dann in Richtung der oberen Ebene oder in Richtung einer Zone (3E) zum Ableiten der Schäume entweicht, und nach der Belüftungsphase:
- einen Entlüftungsschritt, bei dem vor dem Verlassen der Ebene keine Luft mehr in die Schicht von zu behandelnden Materialien eingeführt wird, und der ermöglicht, die dispergierte Luft in Richtung der oberen Ebenen (3, 3A, 3B, 3C) oder bei der am höchsten gelegenen Ebene (3) in Richtung einer Zone (3E) zum Ableiten der Schäume abzuleiten, sowie
- einen Schritt zur Rückgewinnung des entlüfteten Materials durch eine Einlassöffnung einer unmittelbar darunter gelegenen Ebene in Richtung einer Mischzone der unmittelbar darunter gelegenen Ebene oder durch eine Auslassöffnung (S5) des Gehäuses,
**dadurch gekennzeichnet, dass** der Entlüftungsschritt in einer Entlüftungszone der Ebene durchgeführt wird, wobei sich die Entlüftungszone oberhalb und in der Achse der Mischzone der unmittelbar darunter gelegenen Ebene befindet.

2. Flotationsverfahren nach dem vorstehenden Anspruch, bei dem in jeder oberen Ebene die Dauer des Entlüftungsschritts mindestens 20 % der Dauer des Belüftungsschritts beträgt.

3. Flotationsanlage (1) auf mehreren Ebenen zur Durchführung des Verfahrens nach einem der vorstehenden Ansprüche, umfassend ein quaderförmiges Gehäuse (2), das vertikal in Ebenen (3, 3A, 3B, 3C, 3D) unterteilt ist, auf deren Höhe jeweils ein Fluss von zu behandelnden Materialien auf Höhe einer Einlassöffnung (E1, E2, E3, E4, E5) eintritt, die sich an einem seitlichen Ende des Gehäuses (2) befindet, um dort auf Höhe einer Auslassöffnung (S1, S2, S3, S4, S5), die sich am gegenüberliegenden seitlichen Ende befindet, auszutreten, wobei jede obere Ebene (3, 3A, 3B, 3C) einen Abscheider (6) mit Öffnungen (4) umfasst, die so angeordnet sind, dass Luftblasen, die von der unmittelbar darunter liegenden Ebene stammen, hindurchtreten können (3A, 3B, 3C, 3D), wobei der Abscheider (6) mit Öffnungen (4) unmittelbar stromabwärts der Einlassöffnung (E1, E2, E3, E4) der betreffenden Ebene 3, 3A, 3B, 3C) angeordnet ist, wobei die Anlage ferner eine Zone (3E) zum Ableiten der Schäume umfasst, die über den unterschiedlichen Ebenen (3, 3A, 3B, 3C) liegt und mit diesen und einer Ableitöffnung (8) in Verbindung steht, während mindestens eine obere Ebene (3, 3A, 3B, 3C) einen dichten Boden (5) umfasst, der sich zwischen seinem Abscheider (6) mit Öffnungen (4) und seinem Auslass (S1, S2, S3, S4) erstreckt, wobei der dichte Boden (5) konfiguriert ist, um eine Durchlaufzeit ohne Luftzufuhr in die Schicht von zu behandelnden Materialien zu ermöglichen, bevor diese eine Ebene (3, 3A, 3B, 3C, 3D) verlässt, **dadurch gekennzeichnet, dass** die Einlassöffnung (E2, E3, E4, E5) einer Ebene (3A, 3B, 3C, 3D) am gleichen seitlichen Ende des Gehäuses (2) wie die Auslassöffnung (S1, S2, S3, S4) der unmittelbar darüber gelegenen Ebene 3, 3A, 3B, 3C) angeordnet ist.

4. Anlage (1) nach dem vorstehenden Anspruch, **dadurch gekennzeichnet, dass** die Länge des dichten Bodens (5) mindestens 20 % der Länge des Abscheiders (6) mit Öffnungen (4) entspricht.

5. Anlage (1) nach Anspruch 3, **dadurch gekennzeichnet, dass** die Länge des dichten Bodens (5) größer als die Länge zwischen zwei aufeinanderfolgenden Öffnungen (4) des Abscheiders (6) mit Öffnungen (4) ist.

6. Anlage (1) nach Anspruch 5, **dadurch gekennzeichnet, dass** die Länge des dichten Bodens (5) mindestens doppelt so groß wie die Länge zwischen zwei aufeinanderfolgenden Öffnungen (4) des Abscheiders (6) mit Öffnungen (4) ist.

7. Anlage (1) nach einem der Ansprüche 3 bis 6, **dadurch gekennzeichnet, dass** die Anzahl der Öffnungen (4), die ein Abscheider (6) mit Öffnungen (4) umfasst, mit ansteigenden Ebenen (3, 3A, 3B, 3C) zunimmt.

8. Anlage (1) nach einem der Ansprüche 3 bis 7, **dadurch gekennzeichnet, dass** die Öffnungen (4) eines Abscheiders (6) mit Öffnungen (4) eine Größe und Geometrie aufweisen, um eine optimale Ansaugung von Luft aus einer unteren Ebene zu ermöglichen (3A, 3B, 3C, 3D).

9. Anlage (1) nach Anspruch 8, **dadurch gekennzeichnet, dass** die Abscheider (6) mit Öffnungen (4) der oberen Ebenen (3, 3A, 3B, 3C) gegeneinander versetzt sind, um durch den "Venturi"-Effekt eine homogene Ansaugung der Luft aus den unteren Ebenen zu erzeugen.

10. Anlage (1) nach einem der Ansprüche 3 bis 9, **dadurch gekennzeichnet, dass** die Zone zum Ableiten der Schäume einen Schaumsammler (7) umfasst, der in der Lage ist, eine Ansammlung und Absaugung nur des oberen Teils der Schäume zu gewährleisten.

11. Anlage nach Anspruch 10, **dadurch gekennzeichnet, dass** der Schaumsammler (7) eine Neigung aufweist.

12. Anlage (1) nach einem der Ansprüche 3 bis 11, **dadurch gekennzeichnet, dass** jede obere Ebene (3, 3A, 3B, 3C) angrenzend an ihren Auslass (S1, S2, S3, S4) einen dichten Boden (5) aufweist.

13. Anlage (1) nach dem vorstehenden Anspruch, **dadurch gekennzeichnet, dass** die Länge der dichten Böden (5) mit absteigenden Ebenen (3, 3A, 3B, 3C) zunimmt.

## Claims

1. Method for multi-stage flotation in series for the removal of hydrophobic particles from a flow of materials to be treated, comprising a step of introducing, into a stage of an enclosure (2) of parallelepipedal shape, a layer of materials to be treated coming either from an upper stage (3, 3A, 3B, 3C) or directly from an inlet (E1) of the enclosure (2), the method comprising a step of aeration carried out in a mixing zone of said stage, in which the air extracted from the lower stages is mixed, diffused and dispersed in the layer of materials to be treated, then escapes to the upper stage or to a foam discharge zone (3E), and, after the aeration step:
- a deaeration step in which there is no longer any introduction of air into the layer of materials to be treated before its exit from the stage, and which allows the discharge of the dispersed air to the upper stages (3, 3A, 3B, 3C) or, in the case of the uppermost stage (3), to a foam discharge zone (3E), as well as
- a step of recovering the deaerated material through an inlet opening of an immediately lower stage to a mixing zone of the immediately lower stage or through an outlet opening (S5) of the enclosure,
**characterized in that** the deaeration step is implemented in a deaeration zone of the stage, said deaeration zone being located above and in the axis of the mixing zone of the immediately lower stage.

2. Flotation method according to the preceding claim, wherein at each upper stage, the duration of the deaeration step is at least 20% of the duration of the aeration step.

3. Multi-stage flotation facility (1) for implementing the method according to any of the preceding claims, comprising an enclosure (2) of parallelepipedal shape, vertically subdivided into stages (3, 3A, 3B, 3C, 3D) at each of which a flow of materials to be treated enters at an inlet opening (E1, E2, E3, E4, E5) located at a lateral end of the enclosure (2) in order to exit therefrom at an outlet opening (S1, S2, S3, S4, S5) located at the opposite lateral end, each upper stage (3, 3A, 3B, 3C) comprising a separator (6) with openings (4) arranged to allow air bubbles coming from the immediately lower stage (3A, 3B, 3C, 3D) to pass through, said separator (6) with openings (4) being arranged immediately downstream of the inlet opening (E1, E2, E3, E4) of the stage in question 3, 3A, 3B, 3C), said facility further comprising a foam discharge zone (3E) above the various stages (3, 3A, 3B, 3C) and communicating with the latter and with a discharge opening (8), while at least one upper stage (3, 3A, 3B, 3C) comprises a sealed floor (5) extending between its separator (6) with openings (4) and its outlet (S1, S2, S3, S4), said sealed floor (5) being designed to allow a travel time without introduction of air into the layer of materials to be treated before its exit from a stage (3, 3A, 3B, 3C, 3D) **characterized in that** the inlet opening (E2, E3, E4, E5)of a stage (3A, 3B, 3C, 3D) is arranged on the same lateral end of the enclosure (2) as the outlet opening (S1, S2, S3, S4) of the immediately higher stage 3, 3A, 3B, 3C).

4. Facility (1) according to the preceding claim, **characterized in that** the length of said sealed floor (5) corresponds to at least 20% of the length of said separator (6) with openings (4).

5. Facility (1) according to claim 3, **characterized in that** the length of the sealed floor (5) is greater than the length between two consecutive openings (4) of the separator (6) with openings (4).

6. Facility (1) according to claim 5, **characterized in that** the length of the sealed floor (5) is at least two times greater than the length between two consecutive openings (4) of the separator (6) with openings (4).

7. Facility (1) according to any of claims 3 to 6, **characterized in that** the number of openings (4) in a separator (6) with openings (4) increases as the stages (3, 3A, 3B, 3C) get higher.

8. Facility (1) according to any of claims 3 to 7, **characterized in that** the openings (4) of a separator (6) with openings (4) have a size and a geometry such that they allow optimal suction of the air from a lower stage (3A, 3B, 3C, 3D).

9. Facility (1) according to claim 8, **characterized in that** the separators (6) with openings (4) of the upper stages (3, 3A, 3B, 3C) are offset relative to each other so as to create, by "Venturi" effect, homogeneous suction of the air from the lower stages.

10. Facility (1) according to any of claims 3 to 9, **characterized in that** the foam discharge zone comprises a foam collector (7) capable of ensuring collection and discharge of only the upper part of the foams.

11. Facility according to claim 10, **characterized in that** the foam collector (7) has an inclination.

12. Facility (1) according to any of claims 3 to 11, **characterized in that** each upper stage (3, 3A, 3B, 3C) comprises a sealed floor (5) adjacent to its outlet (S1, S2, S3, S4).

13. Facility (1) according to the preceding claim, **characterized in that** the length of the sealed floors (5) increases as the stages (3, 3A, 3B, 3C) get lower.
